# EUROPEAN PATENT APPLICATION

(11) **EP 4 450 209 A2**
(43) Date of publication of application: **23.10.2024**
(21) Application number: 23835044.1
(22) Date of filing: 07.09.2023
(51) Int. Cl.: B23K 26/21, H01M 50/204, B23K 26/03, B23K 26/082, B23K 26/06, B23K 31/00, B23K 26/066

(54) **APPARATUS FOR MANUFACTURING SECONDARY BATTERY AND METHOD FOR MANUFACTURING SECONDARY BATTERY USING SAME**

(30) Priority: 08.07.2022 KR 20220084675; 29.06.2023 KR 20230083907
(71) Applicant: LG Energy Solution, Ltd., Seoul 07335 (KR)
(72) Inventor: KANG, Min Jae, Daejeon 34122 (KR); LEE, Chang Je, Daejeon 34122 (KR); OH, Na Hee, Daejeon 34122 (KR)
(74) Representative: BCKIP Part mbB
(86) International application number: PCT/IB2023/058837
(87) International publication number: WO 2024/009286

(57) **Abstract**

An apparatus for manufacturing a secondary battery is provided according to exemplary embodiments. The apparatus includes a first beam source configured to generate a welding beam, a second beam source configured to generate an inspection beam, a scanner head configured to direct the welding beam and the inspection beam towards a module frame, a servo motor configured to move the scanner head, a detector configured to detect a reflected beam being a portion of the inspection beam that is reflected from the module frame, a processor configured to collect assembly line data of the module frame based on inspection signals generated by the detector, and a controller configured to control the servo motor based on the assembly line data of the module frame.

## Description

### [Technical Field]

The present invention relates to an apparatus for manufacturing a secondary battery and a method of manufacturing the secondary battery using the apparatus.

This application claims the benefit of priority based on Korean Patent Application No. 1 0-2022-0084675, filed on July 8, 2022 and Korean Patent Application No. 10-2023-0083907, filed on June 29, 2023, and the entire contents of the Korean patent applications are incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

Cell manufacturers are paying huge capital expenditures to meet the growth of steep demand for secondary batteries for mobility. Companies are increasing productivity per line to maximize the return on invested capital, and to this end, various researches are continuously being conducted to improve yield and productivity.

### [Disclosure]

### [Technical Problem]

A technical idea of the present invention is directed to providing an apparatus for manufacturing a secondary battery with improved productivity and a method of manufacturing a secondary battery using the same.

### [Technical Solution]

To address the above problem, embodiments of the present invention provide an apparatus for manufacturing a secondary battery. The apparatus includes: a first beam source configured to generate a welding beam; a second beam source configured to generate an inspection beam; a scanner head configured to direct the welding beam and the inspection beam towards a module frame; a servo motor configured to move the scanner head; a detector configured to detect a reflected beam being a part of the inspection beam that is reflected from the module frame; a processor configured to collect assembly line data of the module frame based on an inspection signal generated by the detector; and a controller configured to control the servo motor based on the assembly line data of the module frame.

The assembly line data may include coordinates of an assembly line of a first component and a second component of the module frame.

The controller may be configured to control the servo motor to scan the assembly line of the first component and the second component by the welding beam.

The controller may be configured to correct a welding line based on the assembly line data.

The welding line may be part of the module frame to be scanned by the welding beam.

The controller may be configured to generate a signal for controlling the servo motor and the scanner head to weld the module frame based on the assembly line data.

The scanner head may include a dichroic mirror configured to transmit the welding beam and reflect the inspection beam.

An optical axis of the welding beam transmitted through the dichroic mirror and an optical axis of the inspection beam reflected by the dichroic mirror may at least partially overlap each other.

The scanner head may be configured to obliquely direct the inspection beam and the welding beam to the module frame.

According to embodiments, a method of manufacturing a secondary battery is provided. The method includes scanning a module frame by an inspection beam to collect assembly line data including coordinates of an assembly line of a first component and a second component of the module frame, and welding the first component and second component based on the assembly line data.

The assembly line data may be collected based on a three-dimensional shape of the module frame.

There may be a gap between the first component and second component, and the assembly line of the first component and the second component of the module frame may be a center line on the gap between the first component and the second component.

The welding of the first component and second component may include scanning the module frame by a welding beam based on the assembly line data.

An optical axis of the welding beam and an optical axis of the inspection beam may partially overlap each other.

The welding of the first component and second component may include collecting assembly line data indicating a position of the assembly line and transmitting the assembly line data to the controller.

The controller may be configured to control a movement of a scanner head configured to be direct the inspection beam and the welding beam.

The method may further include correcting coordinates of a welding line to generate a corrected welding line based on the assembly line data.

The welding of the first component and second component may include scanning the module frame by the welding beam along the corrected welding line.

### [Advantageous Effects]

In methods of manufacturing a secondary battery according to embodiments of the present invention, assembly line data of components can be collected based on optical coherence tomography (OCT), and frames can be welded based on the assembly line data. Three-dimensional shapes of components can be determined by OCT and thus there is no error due to surface roughness. In addition, because an OCT optical system can be coupled to a scanner head of a welding beam optical system, a travel time of the scanner head required to perform autofocusing and inspect an assembly line can be minimized, thereby improving the productivity of secondary batteries.

Effects achievable from embodiments of the present invention are not limited to the above-described effects, and other effects that are not described herein will be clearly derived and understood by those of ordinary skilled in the art to which the embodiments of the present invention pertain from the following description. That is, unintended effects achieved when the embodiments of the present invention are implemented are derivable by those of ordinary skilled in the art from the embodiments of the present invention.

### [Brief Description of the Drawings]

FIG. 1 is a diagram illustrating a secondary battery manufacturing apparatus according to embodiments.
FIG. 2 is an exploded perspective view of a module frame.
FIG. 3 is a flowchart of a method of manufacturing a secondary battery according to embodiments.
FIG. 4 is a diagram for describing a method of manufacturing a secondary battery according to embodiments.
FIG. 5 is a diagram for describing a method of manufacturing a secondary battery according to embodiments.
FIG. 6 is a flowchart of a method of manufacturing a secondary battery according to
embodiments.

### [Embodiments of the Present Invention]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### First Embodiment

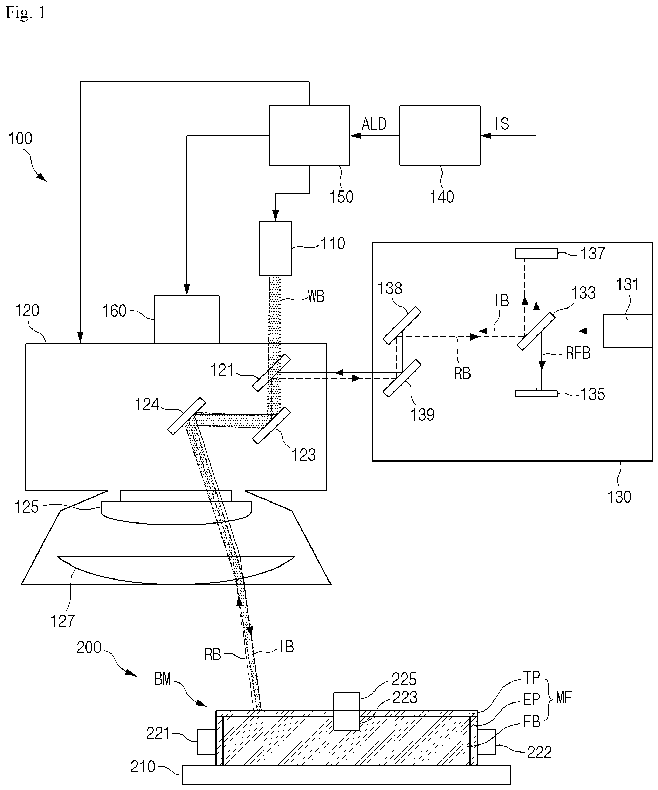

FIG. 1 is a diagram illustrating a secondary battery manufacturing apparatus 100 according to embodiments.

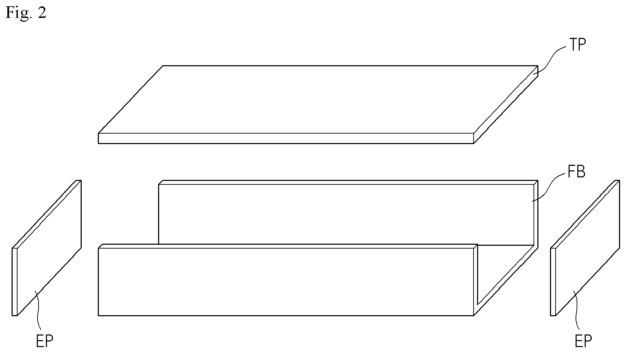

FIG. 2 is an exploded perspective view of a module frame MF.

Referring to FIGS. 1 and 2, according to embodiments, the secondary battery manufacturing apparatus 100 may include a first beam source 110, a scanner head 120, an optical coherence tomography (OCT) optical system 130, a processor 140, a controller 150, and a servo motor 160.

The secondary battery manufacturing apparatus 100 may be configured to process a module frame MF of a battery module BM. The secondary battery manufacturing apparatus 100 may be configured to weld a frame body FB, an end plate EP, and a top plate TP of the module frame MF together. The secondary battery manufacturing apparatus 100 may be configured to perform laser welding.

The first beam source 110 may be a light amplification by stimulated emission of radiation (laser) device. The first beam source 110 may be configured to generate a welding beam WB. The welding beam WB may be a laser beam. According to embodiments, the welding beam WB may be a near-infrared ray. According to embodiments, a wavelength of the welding beam WB may be in a range of about 750 nm to about 2500 nm. According to embodiments, a wavelength of the welding beam WB may be about 1070 nm.

For example, the first beam source 110 may be a solid laser device such as a semiconductor laser device, an Nd:YAGlaser device, a titanium-saphire laser device, or an optical fiber laser device. As another example, the first beam source 110 may be a liquid laser such as a pigment laser device. As another example, the first beam source 110 may be a gas laser device such as a helium-neon laser, a carbon dioxide laser, or an excimer laser.

The welding beam WB generated by the first beam source 110 may be coupled to the scanner head 120. According to embodiments, the welding beam WB may be transmitted to the scanner head 120 through one of a free space optical system, an optical integrated circuit, and a fiber optical system.

The OCT optical system 130 may include a second beam source 131, a beam splitter 133, a reference mirror 135, a detector 137, a first scanning mirror 138, and a second scanning mirror 139.

The OCT optical system 130 may be configured to capture a three-dimensional (3D) image of the module frame MF. The OCT optical system 130 may be based on a Michelson interferometer. An operation of the OCT optical system 130 may be based on a phase delay between a reference beam RFB and a reflected beam RFB. The reflected beam RB may be a part of an inspection beam IB reflected from a sample (i.e., the module frame MF). The phase delay represents the difference in time of flight between the reflected beam RB and the reference beam RFB, and the difference in flight time may include information about the 3D image of the module frame MF. By scanning a surface of the module frame MF by the inspection beam IB, a depth profile of a scanned portion of the module frame MF (i.e., a depth at coordinates on the module frame MF in an X-axis direction and a Y-axis direction) may be obtained and thus a 3D image of the module frame MF may be captured.

The second beam source 131 may be a laser device. The second beam source 131 may be configured to generate an inspection beam IB. The inspection beam IB may be a laser beam. According to embodiments, the inspection beam IB may be a near-infrared ray. According to embodiments, a wavelength of the inspection beam IB may be in a range of about 750 nm to about 2500 nm. According to embodiments, the wavelength of the inspection beam IB may be different from the wavelength of the welding beam WB. According to embodiments, the wavelength of the inspection beam IB may be shorter than the wavelength of the welding beam WB. According to embodiments, the wavelength of the inspection beam IB may be about 820 nm.

According to embodiments, the inspection beam IB may be collimated. According to embodiments, the inspection beam IB may be parallel light. That is, the inspection beam IB may be non-converged light and non-emissive light. According to embodiments, the second beam source 131 may include a collimating lens or a collimating lens may be interposed between the second beam source 131 and the beam splitter 133.

The beam splitter 133 may be provided in an optical path of the inspection beam IB between the scanner head 120 and the second beam source 131. The inspection beam IB may be transmitted to the beam splitter 133. The beam splitter 133 may be configured to divide the inspection beam IB. As a non-limiting example, the beam splitter 133 may be configured to transmit a part of the inspection beam IB and reflect a part of the inspection beam IB to generate the reference beam RFB. A reflectivity of the beam splitter 133 may be substantially the same as a transmittivity of the beam splitter 133 but embodiments are not limited thereto. The reflectivity of the beam splitter 133 may be higher than or lower than the transmittivity of the beam splitter 133.

The reference beam RFB may be reflected by the reference mirror 135, transmitted through the beam splitter 133, and transmitted to the detector 137. The inspection beam IB transmitted through the beam splitter 133 may sequentially pass through the first and second scanning mirrors 138 and 139 and thereafter be coupled to the scanner head 120.

The first scanning mirror 138 may be provided in an optical path of the inspection beam IB between the beam splitter 133 and the scanner head 120. The second scanning mirror 139 may be provided in an optical path of the inspection beam IB between the first scanning mirror 138 and the scanner head 120. Each of the first and second scanning mirrors 138 and 139 may be a galvo mirror. Each of the first and second scanning mirrors 138 and 139 may include a reflective surface and a servo motor configured to drive (e.g., rotatably drive) the reflective surface. The module frame MF may be scanned by the inspection beam IB by driving the first and second scanning mirrors 138 and 139.

The scanner head 120 may include a dichroic mirror 121, a first scanning mirror 123, a second scanning mirror 124, and lenses 125 and 127. The scanner head 120 may be configured to direct the welding beam WB and the inspection beam IB to the module frame MF. Accordingly, the module frame MF may be inspected by the inspection beam IB and welded by the welding beam WB. The scanner head 120 may be configured to scan the module frame MF by the welding beam WB and the inspection beam IB.

The inspection beam IB and the welding beam WB coupled to the scanner head 120 may be transmitted to the dichroic mirror 121. The dichroic mirror 121 may be provided in an optical path between the first beam source 110 and the module frame MF. The dichroic mirror 121 may be provided in an optical path between the second scanning mirror 139 and the module frame MF. An optical path of the inspection beam IB reflected by the dichroic mirror 121 may be similar to or be substantially the same as an optical path of the welding beam WB transmitted through the dichroic mirror 121. An optical axis of the inspection beam IB reflected by the dichroic mirror 121 and an optical axis of the welding beam WB transmitted through the dichroic mirror 121 may at least partially overlap each other. Accordingly, auto-focusing of the welding beam WB by the inspection beam IB may be achieved. The dichroic mirror 121 is a non-limiting example and may include a distributed Bragg reflector.

The dichroic mirror 121 may have a high transmittivity with respect to the welding beam WB. For example, the transmittivity of the dichroic mirror 121 with respect to a wavelength band of the welding beam WB may be 90% or more. For example, the transmittivity of the dichroic mirror 121 with respect to the wavelength band of the welding beam WB may be 95% or more. For example, the transmittivity of the dichroic mirror 121 with respect to the wavelength band of the welding beam WB may be 99% or more.

The dichroic mirror 121 may have a high reflectivity with respect to the inspection beam IB. For example, a reflectivity of the dichroic mirror 121 with respect to a wavelength band of the inspection beam IB may be 90% or more. For example, the reflectivity of the dichroic mirror 121 with respect to the wavelength band of the inspection beam IB may be 95% or more. For example, the reflectivity of the dichroic mirror 121 with respect to the wavelength band of the inspection beam IB may be 99% or more.

The inspection beam IB reflected by the dichroic mirror 121 and the welding beam WB transmitted through the dichroic mirror 121 may sequentially pass through the first scanning mirror 123, the second scanning mirror 124, and the lenses 125 and 127 and thereafter be emitted to the module frame MF. However, embodiments are not limited thereto, and the dichroic mirror 121 may be configured to reflect the welding beam WB and transmit the inspection beam IB. In this case, the dichroic mirror 121 may have a high reflectivity with respect to a wavelength band of the welding beam WB and a high transmittivity with respect to a wavelength band of the inspection beam IB.

The first scanning mirror 123 may be provided in an optical path of the inspection beam IB and the welding beam WB between the dichroic mirror 121 and the module frame MF. The first scanning mirror 123 may be provided in an optical path of the inspection beam IB and the welding beam WB between the first scanning mirror 123 and the module frame MF. Each of the first and second scanning mirrors 123 and 124 may be a galvo mirror. Each of the first and second scanning mirrors 123 and 124 may include a reflective surface and a servo motor configured to drive (e.g., rotatably drive) the reflective surface. The module frame MF may be scanned by the inspection beam IB and the welding beam WB by driving the first and second scanning mirrors 123 and 124.

According to embodiments, the first and second scanning mirrors 123 and 124 may be configured to scan the module frame MF by the inspection beam IB in addition to the welding beam WB, and thus, the first and second scanning mirrors 138 and 139 may be omitted or replaced with non-galvo mirrors (i.e., non-driven fixed mirrors).

Each of the lenses 125 and 127 may be a scanning lens. For example, one of the lenses 125 and 127 may be an F-Theta scanning lens but embodiments are not limited thereto. One of the lenses 125 and 127 may be a flat-field scanning lens or a telecentric F-theta scanning lens.

An F-theta lens is a standard lens for a galvo scanner-based laser tooling system. A diffraction limit, multi-elements and air-spaced lens design are optimized for flat fields and low F-theta distortion on an image plane. A displacement of an output beam of the F-theta lens is f*θ. Here, θ is an incident angle of an input beam, and f is a focal length. Therefore, angular velocities of the input beam and the output beam may be directly proportional to each other, thus allowing an operation of the scanning mirror at a constant angular velocity and simplification of a control device.

Although FIG. 1 illustrates both the inspection beam IB and the welding beam WB for convenience of illustration, the inspection beam IB and the welding beam WB may be separately emitted to the module frame MF. For example, after the module frame MF is inspected by the inspection beam IB, the elements of the module frame MF may be welded together by the welding beam WB.

The servo motor 160 and the fixing device 200 may be configured to adjust relative orientations and positions of the scanner head 120 and the module frame MF so that at least one of the inspection beam IB or the welding beam WB may be obliquely incident on the module frame MF. Due to the oblique incidence of the welding beam WB, spatter caused by the welding beam WB may be prevented or alleviated from being scattered into a battery cell. Accordingly, damage to the battery cell may be mitigated or prevented during the processing of the module frame MF.

An area of the welding beam WB on the module frame MF may be different from an area of the inspection beam IB on the module frame MF. The area of the welding beam WB on the module frame MF may be larger than the area of the inspection beam IB on the module frame MF. The welding beam WB covers a large area of the module frame MF and thus the throughput of the secondary battery manufacturing apparatus 100 may increase. The inspection beam IB covers a narrow area of the module frame MF (i.e., a narrow field of view (FOV)), and thus a resolution of 3D modeling of the module frame MF using the OCT optical system 130 may be enhanced.

The battery module BM may include the module frame MF, a cell stack, and a bus bar assembly. The cell stack may include a plurality of battery cells and a plurality of separators. The plurality of battery cells may include a case, an electrode assembly, an electrolyte, and electrode leads.

The case may be a pouch case, a cylindrical case, or a prismatic case. The electrode assembly may be a j elly-roll type electrode assembly or a stack type electrode assembly. The jelly roll type electrode assembly may include a structure in which a positive electrode, a negative electrode, and a separator interposed therebetween are wound together. The stack type electrode assembly may include a plurality of positive electrodes, a plurality of negative electrodes, and a plurality of separators interposed therebetween, which are stacked sequentially. The electrode leads may include positive electrode lead and a negative electrode lead. The positive electrode lead may be coupled to a positive electrode tab of the electrode assembly, and the negative electrode lead may be coupled to a negative electrode tab of the electrode assembly.

The plurality of separators may horizontally support a plurality of battery cells to prevent swelling of the plurality of battery cells. According to embodiments, the plurality of separators may be thermal barriers.

The bus bar assembly may include a bus bar frame and bus bars. The bus bars may be an external connection terminal for outputting a voltage and a current of the cell stack, and be coupled to the positive electrode lead and the negative electrode lead of the cell stack. The bus bar frame may support the bus bars and the electrode leads of the cell stack. The bus bar assembly may further include an integrated circuit such as a cell management controller (CMC) mounted on the bus bar frame.

The module frame MF may include a frame body FB, end plates EP, and a top plate TP. The elements (i.e., the cell stack and the bus bar assembly) of the battery module BM may be in the module frame MF. The module frame MF may cover the elements (i.e., the cell stack and the busbar assembly) of the battery module BM. The frame body FB may have a U shape. The frame body FB may include a bottom part and sidewalls coupled to the bottom part. The end plates EP and the top plate TP may have a roughly plate shape.

The battery module BM may be loaded on a fixing device 200. The frame body FB, the end plates EP, and the top plate TP of the module frame MF may be maintained in an assembled state by the fixing device 200. The module frame MF may be inspected and welded by the secondary battery manufacturing apparatus 100 while the battery module BM is held by the fixing device 200.

The fixing device 200 may include a stage 210 and a plurality of jigs 221, 222, 223, and 225. The battery module BM may be loaded on the stage 210. The frame body FB, the end plates EP, and the top plate TP of the battery module BM loaded on the stage 210 may be pressurized by the plurality of jigs 221, 222, 223, and 225. The jigs 221 and 222 may pressurize the end plates EP and the frame body FB. The jig 225 may pressurize the frame body FB and the top plate TP. The jigs 223 may pressurize both sidewalls of the frame body FB and the top plate TP.

The reflected beam RB may sequentially pass through the lenses 125 and 127, the first and second scanning mirrors 123 and 124, the dichroic mirror 121, the first and second scanning mirrors 138 and 139, and the beam splitter 133 and thereafter reach the detector 137 .

The detector 137 may be configured to generate an inspection signal IS, based on the reflected beam RB and the reference beam RFB. The detector 137 may include, for example, a charge-coupled device (CCD) camera, a complementary metal oxide semiconductor (CMOS) image sensor, or the like. The detector 137 may be configured to transmit the inspection signal IS to the processor 140.

The processor 140 may be configured to determine a 3D shape of the module frame MF, based on the inspection signal IS. The processor 140 may be configured to collect assembly line data ALD. The processor 140 may be configured to determine an assembly line of the frame body FB and the end plates EP, an assembly line of the frame body FB and the top plate TP, and an assembly line of the end plates EP and the top plate TP, based on the 3D shape of the module frame MF. The processor 140 may be configured to determine a gap between the frame body FB and the end plates EP, a gap between the frame body FB and the top plate TP, and a gap between the end plates EP and the top plate TP, based on the 3D shape of the module frame MF. The processor 140 may be configured to transmit the assembly line data ALD to the controller 150.

The controller 150 may be configured to control overall operations of the first beam source 110, the scanner head 120, and the servo motor 160. The controller 150 may be configured to generate signals for controlling the oscillation of the first beam source 110, a chopping frequency of the welding beam WB, an intensity of the welding beam WB, the driving of the first and second scanning mirrors 123 and 124, and the driving of the servo motor 160.

The controller 150 may be configured to generate a signal for controlling the servo motor 160 and the scanner head 120 to weld the module frame MF, based on the assembly line data ALD. The controller 150 may be configured to control the movement of the scanner head 120 by the servo motor 160 and the driving of the first and second scanning mirrors 123 and 124.

As a non-limiting example, the controller 150 may be a programmable logic controller (PLC). The PLC is a special type of microprocessor-based controller that stores instructions using a programmable memory and implements functions such as logic, sequencing, timing, counting and an arithmetic operation to control machines and processes. It is easy to operate and program the PLC. The controller 150 may include a power supply, a central process unit (CPU), an input interface, an output interface, a communication interface, and memory devices.

Here, the processor 140 and the controller 150 may be implemented as hardware, firmware, software, or a combination thereof. For example, the processor 140 and the controller 150 may be computing devices such as a workstation computer, a desktop computer, a laptop computer, and a tablet computer. The processor 140 and the controller 150 may be simple controllers, microprocessors, complex processors such as a CPU or a GPU, processors configured by software, dedicated hardware, or firmware. The processor 140 and the controller 150 may be implemented, for example, by a general-purpose computer or application-specific hardware such as a digital signal process (DSP), a field-programmable gate array (FPGA) or an application specific integrated circuit (ASIC).

According to some embodiments, operations of the processor 140 and the controller 150 may be implemented as instructions stored on machine-readable media that are readable and executable by one or more processors. Here, the machine-readable media may include an arbitrary mechanism for storing and/or transmitting information in a form readable by a machine (e.g., a computing device). For example, machine-readable media may include a read-only memory (ROM), a random access memory (RAM), magnetic disk storage media, optical storage media, flash memory devices, electrical, optical, acoustic, or other types of radio signals (e.g., carrier waves, infrared signals, digital signals, etc.), and other signals.

Firmware, software, routines, and instructions may also be configured to perform the above-described operations of the processor 140 and the controller 150, or processes described below. However, the above description is provided only for convenience of description, and it should be understood that the above-described operations of the processor 140 and the controller 150 may be performed by a computing device, a processor, a controller, or other devices for executing firmware, software, routines, instructions, etc.

The servo motor 160 may be configured to translate the scanner head 120. The servo motor 160 may be configured to move the scanner head 120 in a vertical direction (i.e., a working distance direction). The welding beam WB may be focused on the module frame MF due to the vertical movement of the scanner head 120. The servo motor 160 may be configured to move the scanner head 120 in a horizontal direction. Due to the horizontal movement of the scanner head 120, the assembly line of the module frame MF may be scanned by the welding beam WB and thus the frame body FB, the end plates EP, and the top plate TP of the module frame MF may be welded together.

### Second Embodiment

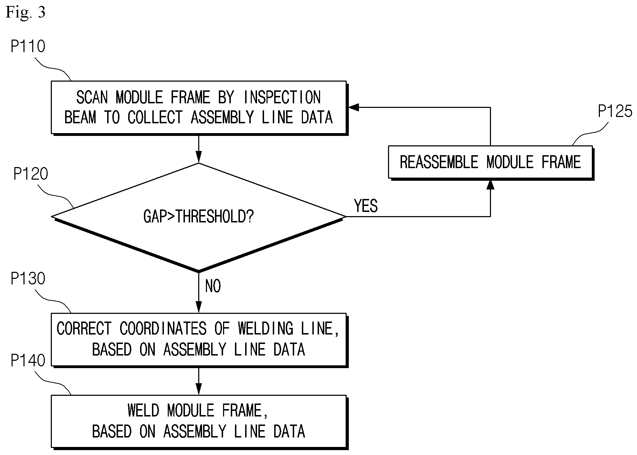

FIG. 3 is a flowchart of a method of manufacturing a secondary battery according to embodiments.

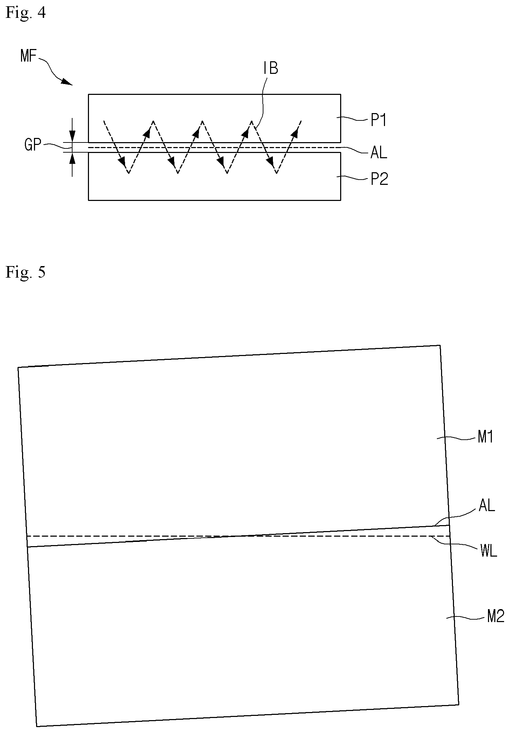

FIG. 4 is a diagram for describing inspection of a module frame according to embodiments. In FIG. 4, a first component P1 may be one of the frame body FB, the top plate TP, and the end plates EP of the module frame MF, and a second component P2 may be another one of frame body FB, top plate TP, and end plates EP of the module frame MF.

Referring to FIGS. 1, 3, and 4, in P110, the module frame MF may be scanned by the inspection beam IB to collect the assembly line data ALD. More specifically, in order to collect the assembly line data ALD, an assembly line AL of the first component P1 and the second component P2, and parts of the first and second components P1 and P2 adjacent to the assembly line AL may be scanned by the inspection beam IB. A region on the module frame MF scanned by the inspection beam IB may include a zigzag line (e.g., a triangular waveform line). A sampling frequency of scanning by the inspection beam IB may be in a range of several tens of kHz to several hundreds of kHz.

Here, the assembly line AL may be a boundary line between the first and second components P1 and P2 of the module frame MF. The assembly line AL may be a profile of a contact surface between the first and second components P1 and P2 of the module frame MF.

A Z-field measurement area (i.e., depth measurement limit) of the inspection beam IB may be in a range of several mm to several tens of mm. The Z-field measurement area (i.e., depth measurement limit) of the inspection beam IB may be in a range of about 3 mm to about 12 mm. A resolution of the inspection beam IB in the Z-axis direction may be in a range of about 1 µm to about 100 µm.

A diameter of an XY field measurement area (i.e., a horizontal scanning range) of the inspection beam IB may be in a range of several mm to several tens of mm. A resolution of an XY plane of the inspection beam IB may be in a range of about 1 µm to about 100 µm. Here, the XY plane may be a scanning plane of the inspection beam IB, and the Z axis may be substantially perpendicular to the XY plane.

An inspection signal IS may be generated by scanning the module frame MF by the inspection beam IB. The processor 140 may be configured to determine a 3D shape of the module frame MF, based on the inspection signal IS. The processor 140 may be configured to collect the assembly line data ALD, based on the 3D shape of the module frame MF. The assembly line data ALD may include coordinates of the assembly line AL. The coordinates of the assembly line AL may be coordinates on a scanning plane of the module frame MF using the inspection beam IB, and the coordinates of the assembly line AL may include an X-direction coordinate and a Y-direction coordinate.

There may be a gap GP between the first and second components P1 and P2 due to a manufacturing error such as surface roughness, chipping out, or breakage of the first and second components P1 and P2, a system error and an accidental error caused by the fixing device 200. When the reflected beam RB is not detected or the depth of a portion of the module frame MF is greater than a critical depth, a corresponding portion of the module frame MF may be determined as the gap GP. When the module frame MF has the gap GP with a non-zero gap width, the assembly line AL may be determined as a center line of the gap GP (e.g., a center line of the gap GP in a width direction). The processor 140 may be configured to determine the assembly line AL from the gap GP. Unlike that shown in FIG. 4, the first and second components P1 and P2 may be ideally assembled together, and a width of the gap GP may be zero.

Next, in P120, the gap GP may be compared with a threshold. In P125, when the gap GP exceeds the threshold, the module frame MF may be reassembled. After the reassembly of the module frame MF, P110 is returned to inspect the module frame MF to collect the assembly line data ALD.

Referring to FIGS. 1, 3, and 5, in P130, when the gap GP (see FIG. 4) does not exceed the threshold (i.e., when the gap GP is equal to or less than the threshold), coordinates of a welding line WL may be corrected based on the assembly line data ALD. The welding line WL may be determined based on a standard model of the module frame MF of the battery module BM loaded in the fixing device 200. The welding line WL may be a part to be welded of the ideal module frame MF, without process errors. The welding line WL and the assembly line AL may be misaligned with to each other due to production and process errors of the module frame MF. The misalignment between the welding line WL and the assembly line AL may include inclination, separation, and the like. The controller 150 may be configured to correct the coordinates of the welding line WL to generate a corrected welding line, based on the assembly line data ALD. The correction of the welding line WL may include correcting the coordinates of the welding line WL, based on a starting point and an ending point of the assembly line AL.

Next, in P140, the module frame MF may be welded based on the corrected welding line. The welding of the module frame MF may include scanning the module frame MF by the welding beam WB along the corrected welding line. According to embodiments, by welding the module frame MF, based on the corrected welding line, a welding failure and weak welding of the module frame MF may be prevented, and the reliability of manufacturing a secondary battery may be improved.

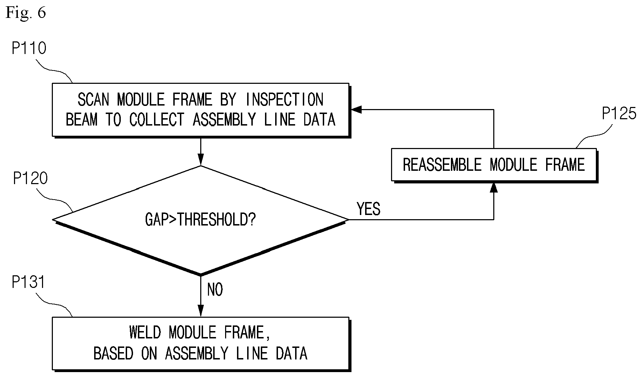

FIG. 6 is a flowchart of a method of manufacturing a secondary battery according to embodiments.

In FIG. 6, P110 and P120 are substantially the same as those described above with reference to FIGS. 3 to 5 and thus a redundant description thereof is omitted here.

Referring to FIGS. 1 and 6, in P131, the module frame MF may be welded based on the assembly line data ALD. In the present example, a welding line WL is not corrected based on the assembly line data ALD, and the module frame MF may be directly scanned by the welding beam WB, based on the assembly line data LD. The controller 150 is configured to perform many operations in addition to the correction of the welding positions WP. Because the controller 150 generates a signal for performing welding directly using the assembly line data ALD, computing power of the controller 150 may be saved and thus the continuity and reliability of the process may be improved.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing apparatus comprising:
a first beam source configured to generate a welding beam;
a second beam source configured to generate an inspection beam;
a scanner head configured to direct the welding beam and the inspection beam towards a module frame;
a servo motor configured to move the scanner head;
a detector configured to detect a reflected beam being a part of the inspection beam that is reflected from the module frame;
a processor configured to collect assembly line data of the module frame based on an inspection signal generated by the detector; and
a controller configured to control the servo motor based on the assembly line data of the module frame.

2. The secondary battery manufacturing apparatus of claim 1, wherein the assembly line data comprises coordinates of an assembly line of a first component and a second component of the module frame.

3. The secondary battery manufacturing apparatus of claim 2, wherein the controller is configured to control the servo motor to scan the assembly line of the first component and the second component by the welding beam.

4. The secondary battery manufacturing apparatus of claim 1, wherein the controller is configured to correct a welding line based on the assembly line data, and
wherein the welding line is part of the module frame to be scanned by the welding beam.

5. The secondary battery manufacturing apparatus of claim 1, wherein the controller is configured to generate a signal for controlling the servo motor and the scanner head to weld the module frame based on the assembly line data.

6. The secondary battery manufacturing apparatus of claim 1, wherein the scanner head comprises a dichroic mirror configured to transmit the welding beam and reflect the inspection beam.

7. The secondary battery manufacturing apparatus of claim 6, wherein an optical axis of the welding beam transmitted through the dichroic mirror and an optical axis of the inspection beam reflected by the dichroic mirror at least partially overlap each other.

8. The secondary battery manufacturing apparatus of claim 1, wherein the scanner head is configured to obliquely direct the inspection beam and the welding beam to the module frame.

9. A method of manufacturing a secondary battery, the method comprising:
scanning a module frame by an inspection beam to collect assembly line data including coordinates of an assembly line of a first component and a second component of the module frame; and
welding the first component and second component based on the assembly line data .

10. The method of claim 9, wherein the assembly line data is collected based on a three-dimensional shape of the module frame.

11. The method of claim 10, wherein there is a gap between the first component and second component, and
the assembly line of the first component and the second component of the module frame is a center line on the gap between the first component and the second component.

12. The method of claim 9, wherein the welding of the first component and second component comprises scanning the module frame by a welding beam based on the assembly line data.

13. The method of claim 12, wherein an optical axis of the welding beam and an optical axis of the inspection beam partially overlap each other.

14. The method of claim 9, wherein the welding of the first component and second component comprises collecting assembly line data indicating a position of the assembly line and transmitting the assembly line data to the controller, and
the controller is configured to control a movement of a scanner head configured to be direct the inspection beam and the welding beam.

15. The method of claim 14, further comprising correcting coordinates of a welding line to generate a corrected welding line based on the assembly line data.

16. The method of claim 15, wherein the welding of the first component and second component further comprises scanning the module frame by the welding beam along the corrected welding line.
